# EUROPÄISCHE PATENTSCHRIFT

(11) **EP 3 578 923 B1**
(45) Veröffentlichungstag und Bekanntmachung des Hinweises auf die Patenterteilung: **04.08.2021**
(21) Anmeldenummer: 18176794.8
(22) Anmeldetag: 08.06.2018
(51) Int. Cl.: G01C 21/36, G05D 1/02, G06K 7/14

(54) **NAVIGATIONSSYSTEM**
NAVIGATION SYSTEM
SYSTÈME DE NAVIGATION

(43) Veröffentlichungstag der Anmeldung: 11.12.2019
(73) Patentinhaber: SICK AG, 79183 Waldkirch (DE)
(72) Erfinder: FISCHER, Jonas, 79369 Wyhl (DE); BEHRENS, Andreas, 79312 Emmendingen (DE); ROMBACH, Cornel, 79211 Denzlingen (DE)
(74) Vertreter: Manitz Finsterwald Patent- und Rechtsanwaltspartnerschaft mbB

(56) Entgegenhaltungen:
- US-A1- 2007 276 558
- US-A1- 2016 313 740
- Michal Banik: "Navigation application in the building via two-dimensional barcode recognition", , 1. Januar 2014 (2014-01-01), XP055524449, Gefunden im Internet: URL:https://www.theseus.fi/bitstream/handl e/10024/75538/banik_michal.pdf?sequence=1 [gefunden am 2018-11-16]
- Robin Brügger ET AL: "Annular Barcodes", IMVS Fokus Report 2015, 23. Januar 2015 (2015-01-23), XP055524749, Heidelberg ISBN: 978-3-89864-457-0 Gefunden im Internet: URL:https://www.fhnw.ch/de/die-fhnw/hochsc hulen/ht/institute/institut-fuer-mobile-un d-verteilte-systeme/publikationen/media/fo kus-report-2015.pdf [gefunden am 2018-11-19]
- Leo Hartman ET AL: "Robot Vision for Space Applications Schedule and Proceedings Table of Contents Satellite Pose Acquisition and Tracking with Variable Dimensional Local Shape Development of a Scaled Ground Testbed for Lidar-based Pose Estimation End-point Control of a Flexible Structure Mounted Manipulator Based on W", , 1. Januar 2005 (2005-01-01), XP055136470, Gefunden im Internet: URL:http://webdocs.cs.ualberta.ca/~robvis0 5/ProceedingsCompr.pdf#page=35 [gefunden am 2014-08-26]
- BECK JONG HWAN ET AL: "Vision based distance measurement system using two-dimensional barcode for mobile robot", 2017 4TH INTERNATIONAL CONFERENCE ON COMPUTER APPLICATIONS AND INFORMATION PROCESSING TECHNOLOGY (CAIPT), IEEE, 8. August 2017 (2017-08-08), Seiten 1-4, XP033332109, DOI: 10.1109/CAIPT.2017.8320742 [gefunden am 2018-03-20]
- EDWIN OLSON: "AprilTag: A robust and flexible visual fiducial system", ROBOTICS AND AUTOMATION (ICRA), 2011 IEEE INTERNATIONAL CONFERENCE ON, IEEE, 9. Mai 2011 (2011-05-09), Seiten 3400-3407, XP032033438, DOI: 10.1109/ICRA.2011.5979561 ISBN: 978-1-61284-386-5

## Beschreibung

Die vorliegende Erfindung betrifft ein Navigationssystem für ein fahrerloses Transportfahrzeug, mit einem Satz von rasterartig am Boden anzuordnenden Markierungselementen, in denen Navigationsinformationen codiert sind, einer am fahrerlosen Transportfahrzeug anzuordnenden Sensoreinrichtung zum Auslesen von Navigationsinformationen aus den Markierungselementen und einer mit der Sensoreinrichtung in Verbindung stehenden Auswerteeinrichtung zum Erzeugen von Steuerungssignalen für das fahrerlose Transportfahrzeug anhand von ausgelesenen Navigationsinformationen.

Solche Navigationssysteme werden allgemein als "Rasternavigationssysteme" bezeichnet und dienen zur Orientierung von automatisch fahrenden Transportfahrzeugen innerhalb eines durch das Raster definierten Aktionsbereichs wie eines Gebäudes oder einer Betriebsstätte. Die ausgelesenen Navigationsinformationen ermöglichen dem fahrerlosen Transportfahrzeug eine zielgerichtete Bewegung von einem Ausgangspunkt zu einem Endpunkt. Je nach Anwendung können die Navigationsinformationen Ortskoordinaten, Richtungsangaben, Nummern, kennzeichnende Kommentare wie z. B. "Regal 1" und dergleichen umfassen. Unter den Begriff "fahrerloses Transportfahrzeug" sollen in der vorliegenden Offenbarung alle Arten von automatisch fahrenden Fahrzeugen, zum Beispiel AGVs, AGCs, Flurförderfahrzeuge, Hubgeräte und dergleichen, fallen.

Die Markierungselemente können jeweils einen RFID-Transponder (*radiofrequency identification transponder*) umfassen, der in den Boden eingelassen ist. Beispielsweise können solche Markierungselemente unter Verwendung eines Harzes in gebohrten Bodenvertiefungen befestigt sein. Am fahrerlosen Transportfahrzeug ist bei solchen Systemen ein entsprechendes RFID-Lesegerät vorzusehen. RFID-basierte Rasternavigationssysteme sind insbesondere bei großen Aktionsbereichen mit relativ hohen Kosten verbunden.

Alternativ können jeweilige zweidimensionale graphische Codemuster wie zum Beispiel Matrixcodes auf die Markierungselemente aufgebracht sein. Lesegeräte für zweidimensionale graphische Codemuster sind jedoch relativ kostspielig. Navigationssysteme, die auf zweidimensionalen graphischen Codemustern beruhen, sind beispielsweise in der US 2016/0313740 A1 und in der US 2007/0276558 A1 offenbart.

In dem Aufsatz von Brügger R. et al., "Annular Barcodes", IMVS Fokus Report 2015, 23. Januar 2015, ISBN 978-3-89864-457-0, ist ein ringförmiger Barcode offenbart, der sich für die Aufbringung auf runde Datenträger eignet. Auf dem Fachgebiet sucht man nach Möglichkeiten, einfachere und kostengünstigere Navigationssysteme für fahrerlose Transportfahrzeuge bereitzustellen.

Die Lösung dieser Aufgabe erfolgt durch ein Navigationssystem mit den Merkmalen des Anspruchs 1.

Die Erfindung sieht vor, dass jedes der Markierungselemente wenigstens zwei graphische Codemuster aufweist, die jeweils zur Codierung der Navigationsinformationen vorgesehen sind und die jeweils als eindimensionale Codemuster ausgeführt sind und einen entlang einer Abtastrichtung aufgetragenen Code umfassen, wobei die Abtastrichtungen der wenigstens zwei graphischen Codemuster um einen Winkelversatz zueinander versetzt ausgerichtet sind.

Eine Sensoreinrichtung zum Auslesen von eindimensionalen graphischen Codemustern ist wesentlich kostengünstiger als eine Sensoreinrichtung zum Auslesen von zweidimensionalen graphischen Codemustern. Einer Verwendung einzelner eindimensionaler Codemuster als ausschließliche Positionsmarkierungen bei Rasternavigationssystemen steht jedoch der Umstand entgegen, dass sich das fahrerlose Transportfahrzeug einem Markierungselement aus beliebigen Richtungen nähern kann, die durch die Sensoreinrichtung vorgegebene Abtastrichtung aber nicht beliebig stark von der Abtastrichtung des Codemusters abweichen darf. Ein deutlich fehlausgerichtetes Codemuster kann im Allgemeinen nicht korrekt erkannt werden.

Dadurch dass erfindungsgemäß jedes Markierungselement mehrere unterschiedlich ausgerichtete eindimensionale Codemuster umfasst, kann die Sensoreinrichtung bei zu starker Fehlausrichtung auf ein anderes Codemuster ausweichen, um die Navigationsinformationen auszulesen. Somit ist trotz der Verwendung eines kostengünstigen eindimensionalen Lesegeräts eine sichere Positionsbestimmung des fahrerlosen Transportfahrzeugs möglich.

Vorzugsweise sind die Codes der eindimensionalen Codemuster jeweils ausschließlich entlang der Abtastrichtung aufgetragen. Das heißt es sind eindimensionale Codemuster im eigentlichen Sinne bevorzugt. Allgemein ist unter der Abtastrichtung eines eindimensionalen Codemusters diejenige Richtung zu verstehen, entlang der sich der Reflexionsgrad oder Remissionsgrad des Untergrunds ändert.

Es ist bevorzugt, dass der Winkelversatz einem Vollwinkel geteilt durch die Anzahl der wenigstens zwei eindimensionalen Codemuster entspricht. Die durch die einzelnen Codemuster vorgegebenen Abtastrichtungen sind also vorzugsweise gleichmäßig verteilt ausgerichtet. Dies hat den Vorteil, dass die Winkelbereiche, die durch keine Abtastrichtung abgedeckt sind, so klein wie möglich gehalten werden.

Bei Vorhandensein lediglich zweier Codemuster pro Markierungselement kann es jedoch auch vorgesehen sein, dass die Abtastrichtungen um etwa 90° zueinander versetzt sind. Es hat sich herausgestellt, dass insbesondere mit Unterstützung entsprechender Auswertungsalgorithmen zwei Codemuster pro Markierungselement ausreichen, um bei Anfahrt aus einer beliebigen Richtung ein zuverlässiges Auslesen der Navigationsinformationen zu ermöglichen.

Gemäß einer Ausführungsform der Erfindung weist jedes der Markierungselemente wenigstens vier eindimensionale graphische Codemuster auf, deren Abtastrichtungen jeweils um den gleichen Winkelversatz zueinander versetzt ausgerichtet sind. Dies hat sich hinsichtlich des erforderlichen Rechenaufwands als besonders günstig erwiesen. Eine spezielle Ausgestaltung der Erfindung sieht vor, dass jedes der Markierungselemente genau vier eindimensionale graphische Codemuster aufweist, deren Abtastrichtungen jeweils um einen Winkelversatz von 90 Grad zueinander versetzt ausgerichtet sind.

Eine weitere Ausführungsform der Erfindung sieht vor, dass in den Codemustern jeweils eine Positionsinformation und eine Richtungsinformation codiert ist, wobei, in einem bestimmungsgemäßen Betriebszustand des Navigationssystems, die Positionsinformation die Position des betreffenden Markierungselements innerhalb einer rasterartigen Anordnung von Markierungselementen angibt und die Richtungsinformation die Orientierung der Abtastrichtung des betreffenden Codemusters oder einer mit dieser in festem Zusammenhang stehenden Bezugsrichtung relativ zu einer ortsfesten Referenzachse angibt. Anhand der Richtungsinformation kann die Auswerteeinrichtung erkennen, aus welcher Richtung das betreffende Markierungselement angefahren wird und in welche Richtung es weiterfahren muss. In einer besonders einfachen Ausgestaltung sind Himmelsrichtungen in den Codemustern codiert.

Die Sensoreinrichtung kann dazu ausgebildet sein, bei einem Anfahren eines Markierungselements durch das fahrerlose Transportfahrzeug eine Abweichung der Abtastrichtung eines Codemusters von einer momentanen Abtastrichtung der Sensoreinrichtung zu erkennen, wobei die Auswerteeinrichtung dazu ausgebildet ist, anhand der erkannten Abweichung eine Korrekturfahrt des fahrerlosen Transportfahrzeugs auszulösen, welche der Abweichung entgegenwirkt. Eine solche Korrekturfahrt ist einfach und schnell durchführbar. Nach einer entsprechenden Neuausrichtung der Sensoreinrichtung kann das betreffende Codemuster und/oder ein weiteres Codemuster des Markierungselements zuverlässig erkannt werden. Unter den Begriff "Korrekturfahrt" soll nicht nur ein Rangieren fallen, sondern auch eine Ausrichtbewegung des fahrerlosen Transportfahrzeugs, beispielsweise eine Drehung. Anstelle einer Korrekturfahrt könnte grundsätzlich auch eine korrigierende Verstellung der Sensoreinrichtung vorgenommen werden.

Eine bevorzugte Ausführungsform der Erfindung sieht vor, dass die eindimensionalen Codemuster als Strichcodes ausgeführt sind und die Sensoreinrichtung einen Strichcodeleser umfasst. Der Strichcodeleser kann insbesondere als Laserscanner ausgeführt sein. Strichcodeleser werden in hohen Stückzahlen für vielfältige Anwendungen produziert und sind dementsprechend kostengünstig erhältlich.

Gemäß einer weiteren Ausführungsform der Erfindung sind zumindest einige der eindimensionalen Codemuster auf einer Kreislinie angeordnet. Dies erleichtert eine Codemustererkennung bei beliebiger Anfahrrichtung. Die eindimensionalen Codemuster können insbesondere gleichmäßig über den Umfang der Kreislinie verteilt angeordnet sein.

Die eindimensionalen Codemuster können einen ersten Satz von Codemustern und einen zweiten Satz von Codemustern umfassen, wobei die Codemuster des ersten Satzes auf einer inneren Kreislinie und die Codemuster des zweiten Satzes auf einer äußeren Kreislinie angeordnet sind, bevorzugt derart, dass die Anzahl der Codemuster des ersten Satzes kleiner ist als die Anzahl der Codemuster des zweiten Satzes. Die Codemuster des zweiten Satzes können dazu genutzt werden, die Ausrichtung der Sensoreinrichtung relativ zum Markierungselement zu bestimmen. Die Navigationsinformationen können dann, gegebenenfalls nach einer Korrekturfahrt wie vorstehend beschrieben, aus einem Codemuster des ersten Satzes ausgelesen werden.

Die Markierungselemente können jeweils eine Mittenkennzeichnung aufweisen, um eine exakte Positionierung des fahrerlosen Transportfahrzeugs relativ zum Markierungselement und/oder eine verbesserte Signalauswertung zu ermöglichen. Insbesondere kann ein einfaches Kreuz als Mittenkennzeichnung vorgesehen sein.

Der Mittenkennzeichnung kann wenigstens ein Führungssymbol zugeordnet sein, das einen Abstand eines Messpunkts von der Mitte des Markierungselements kenntlich macht. Ein solches Führungssymbol ermöglicht eine Hinführung der Sensoreinrichtung zur Mitte des Markierungselements. Beispielsweise kann ein keilförmiges, in die Mitte des Markierungselements weisendes Führungssymbol vorgesehen sein.

Die Markierungselemente können als Aufkleber ausgeführt sein, auf welche die graphischen Codemuster aufgedruckt sind. Dies ermöglicht eine einfache und schnelle Herstellung, die gegebenenfalls mittels eines kommerziellen Druckers vor Ort durchführbar ist. Das heißt ein bestehender Aktionsbereich kann auf einfache und schnelle Weise erweitert werden.

Die Auswerteeinrichtung kann dazu ausgebildet sein, bei einem lediglich teilweise erkannten Codemuster anhand des erkannten Teils eine Korrekturfahrt des fahrerlosen Transportfahrzeugs auszulösen und/oder mittels eines Rekonstruktionsalgorithmus den nicht erkannten Teil automatisch zu ergänzen. Die Zuverlässigkeit des Navigationssystems wird hierdurch verbessert.

Die Erfindung betrifft auch ein Markierungselement für ein wie vorstehend beschriebenes Navigationssystem, mit einer zur Befestigung am Boden ausgebildeten Unterseite und einer Oberseite, auf die eine Positionskennzeichnung aufgebracht ist.

Erfindungsgemäß ist vorgesehen, dass die Positionskennzeichnung wenigstens zwei graphische Codemuster aufweist, die jeweils als eindimensionale Codemuster ausgeführt sind und einen entlang einer Abtastrichtung aufgetragenen Code umfassen, wobei die Abtastrichtungen der wenigstens zwei graphischen Codemuster um einen Winkelversatz zueinander versetzt ausgerichtet sind. Ein entsprechendes Markierungselement ermöglicht die Verwendung eines einfachen und kostengünstigen Strichcodelesers zum Bestimmen der Positionskennzeichnung.

Weiterhin betrifft die Erfindung ein fahrerloses Transportsystem mit einem wie vorstehend beschrieben ausgestalteten Navigationssystem.

Weiterbildungen der Erfindung sind auch in den abhängigen Ansprüchen, der Beschreibung sowie den beigefügten Zeichnungen angegeben.

Die Erfindung wird nachfolgend beispielhaft anhand der Zeichnungen beschrieben.
- Fig. 1: ist eine vereinfachte Draufsicht auf ein erfindungsgemäßes Navigationssystem für ein fahrerloses Transportfahrzeug.
- Fig. 2: zeigt ein gemäß einer ersten Ausführungsform der Erfindung gestaltetes Markierungselement des Navigationssystems gemäß Fig. 1.
- Fig. 3: zeigt ein gemäß einer zweiten Ausführungsform der Erfindung gestaltetes Markierungselement des Navigationssystems gemäß Fig. 1.
- Fig. 4: zeigt ein gemäß einer dritten Ausführungsform der Erfindung gestaltetes Markierungselement des Navigationssystems gemäß Fig. 1.

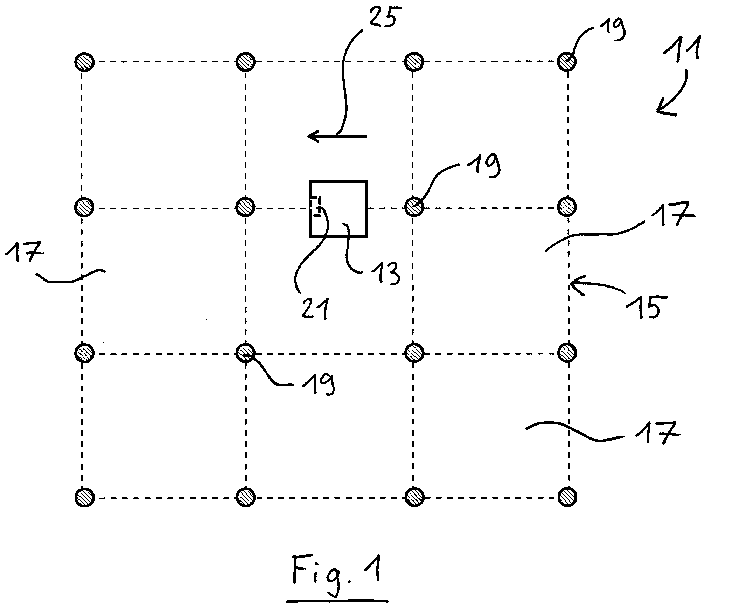

Das in Fig. 1 dargestellte Navigationssystem 11 dient dazu, ein fahrerloses Transportfahrzeug 13 in einem begrenzten Aktionsbereich 15 wie z. B. einer Lagerhalle automatisch zu einem vorgegebenen Ziel zu leiten. Zu diesem Zweck ist der Aktionsbereich 15 rasterartig in aneinandergrenzende, beispielsweise quadratische Einzelbereiche 17 aufgeteilt, wobei in den Ecken der Einzelbereiche 17 jeweilige Markierungselemente 19 angeordnet sind. Die Markierungselemente 19 tragen jeweilige Positionskennzeichnungen, die von einer am fahrerlosen Transportfahrzeug 13 angebrachten, in Fig. 1 lediglich schematisch dargestellten Sensoreinrichtung 21 erkannt werden. Eine mit der Sensoreinrichtung 21 in Verbindung stehende, nicht dargestellte Auswerteeinrichtung sorgt in grundsätzlich bekannter Weise dafür, dass das fahrerlose Transportfahrzeug 13 vorgegebene Positionen des Aktionsbereichs 15 anfährt, um beispielsweise Produkte oder Bauteile anzuliefern oder abzuholen. Eine momentane Fahrtrichtung 25 des fahrerlosen Transportfahrzeugs 13 ist in Fig. 1 durch einen Pfeil angegeben.

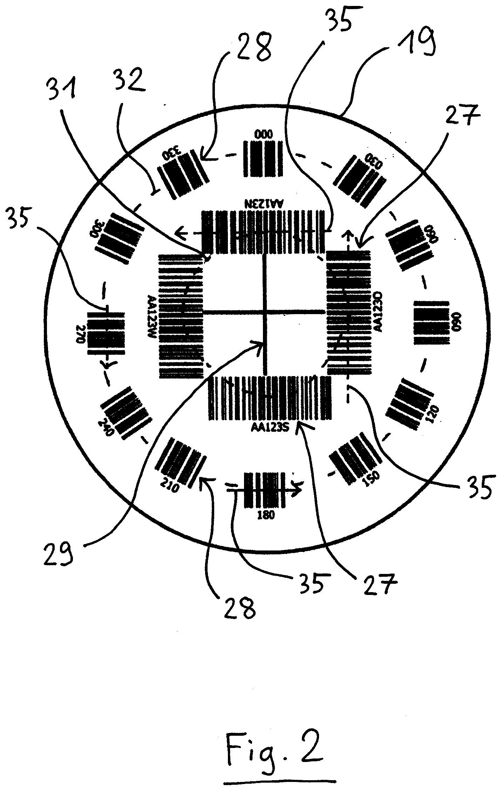

Fig. 2 zeigt eines der Markierungselemente 19, das gemäß einer ersten Ausführungsform der Erfindung gestaltet ist. Es ist als Aufkleber zum Aufkleben auf den Boden ausgeführt und umfasst einen ersten, inneren Satz von graphischen Codemustern 27, einen zweiten, äußeren Satz von graphischen Codemustern 28 sowie eine kreuzförmige Mittenkennzeichnung 29. Die graphischen Codemuster 27, 28 und die Mittenkennzeichnung 29 sind jeweils auf das Markierungselement 19 aufgedruckt. Der Durchmesser eines Markierungselements 19 beträgt vorzugsweise wenigstens 30 mm und höchstens 200 mm.

Die Codemuster 27 des inneren Satzes sind auf einer zur Verdeutlichung gestrichelt dargestellten inneren Kreislinie 31 angeordnet, während die Codemuster 28 des äußeren Satzes auf einer zu der inneren Kreislinie 31 konzentrischen äußeren Kreislinie 32 angeordnet sind. Alle Codemuster 27, 28 sind als eindimensionale Strichcodes ausgeführt. Das heißt jedes Codemuster 27, 28 definiert eine einzelne Abtastrichtung 35, entlang welcher der Code aufgetragen ist. Demgemäß ist die Sensoreinrichtung 21 (Fig. 1) als eindimensionaler Codeleser, vorzugsweise als Strichcodeleser, ausgeführt.

Wie gezeigt sind die Codemuster 27, 28 jedes Satzes derart angeordnet, dass die Abtastrichtungen 35 um einen Winkelversatz zueinander versetzt ausgerichtet sind. Speziell weisen die Abtastrichtungen 35 bei dem dargestellten Ausführungsbeispiel jeweils in Umfangsrichtung der betreffenden Kreislinie 31, 32. Weiterhin sind die Codemuster 27, 28 jedes Satzes gleichmäßig über die betreffende Kreislinie 31, 32 verteilt.

In jedem der Codemuster 27, 28 ist eine Positionsinformation und eine Richtungsinformation codiert. In dem in Fig. 1 gezeigten bestimmungsgemäßen Betriebszustand des Navigationssystems 11 gibt die Positionsinformation die Position des betreffenden Markierungselements 19 innerhalb des Aktionsbereichs 15 an, während die Richtungsinformation die Orientierung der Abtastrichtung des betreffenden Codemusters oder einer mit dieser in festem Zusammenhang stehenden Bezugsrichtung relativ zu einer ortsfesten Referenzachse angibt. Bei den Codemustern 27 des inneren Satzes ist als Richtungsinformation die Himmelsrichtung angegeben, wohingegen bei den Codemustern 28 des äußeren Satzes der Winkel angegeben ist. Die Positionsinformation ist zumindest für alle Codemuster 27 des inneren Satzes gleich und charakteristisch für das betreffende Markierungselement 19.

Wenn sich das fahrerlose Transportfahrzeug 13 aus einer beliebigen Richtung einem Markierungselement 19 nähert, liest die Sensoreinrichtung 21 dasjenige der äußeren Codemuster 28 aus, das zuerst erkannt wird bzw. dessen Abtastrichtung 35 am ehesten mit der Abtastrichtung der Sensoreinrichtung 21 übereinstimmt. Anhand der ausgelesenen Richtungsinformation kann die Auswerteeinrichtung erkennen, aus welcher Richtung das betreffende Markierungselement 19 angefahren wird und wie sich das fahrerlose Transportfahrzeug 13 positionieren muss, damit die Positionsinformation eines der Codemuster 27 des inneren Satzes möglichst gut ausgelesen werden kann. Dies ist dann der Fall, wenn die Abtastrichtung 35 des betreffenden Codemusters 27 möglichst wenig von der Abtastrichtung der Sensoreinrichtung 21 abweicht. Die Mittenkennzeichnung 29 wird zusätzlich zur Ausrichtung des fahrerlosen Transportfahrzeugs 13 verwendet. Anhand der ausgelesenen Positionsinformation kann die Auswerteeinrichtung in grundsätzlich bekannter Weise die Weiterfahrt des fahrerlosen Transportfahrzeugs 13 steuern.

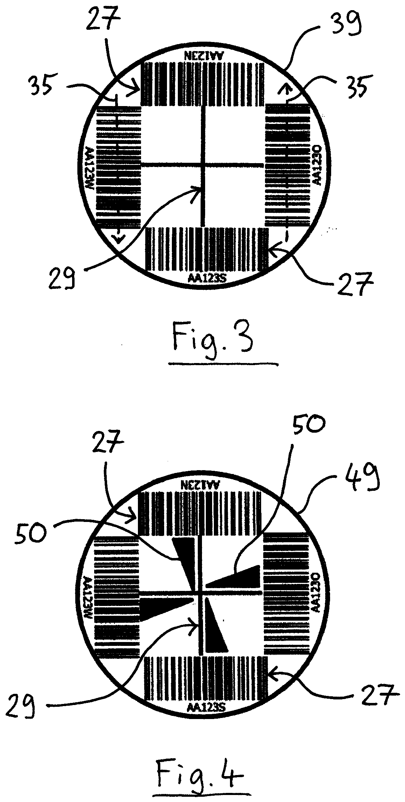

Eine vereinfachte Variante eines erfindungsgemäßen Markierungselements 39 ist in Fig. 3 dargestellt. Hier ist der äußere Satz von Codemustern weggelassen, das heißt das Markierungselement 39 umfasst lediglich vier Codemuster 27, deren Abtastrichtungen 35 jeweils um 90° zueinander versetzt angeordnet sind. Es hat sich gezeigt, dass insbesondere bei einer erweiterten Funktionalität der Sensoreinrichtung 21 und/oder der Auswerteeinrichtung vier Codemuster 27 ausreichend sind, um auch unter ungünstigen Bedingungen wie z. B. einer schrägen Anfahrt ein korrektes Auslesen zu ermöglichen. Insbesondere kann die Auswerteeinrichtung dazu ausgebildet sein, eine Teilcodeerkennung auszuführen und gegebenenfalls mittels eines Coderekonstruktionsalgorithmus den vollständigen Strichcode aus den erkannten Teilstücken zu rekonstruieren. Eine Mittenkennzeichnung 29 ist bei der in Fig. 3 dargestellten Variante ebenfalls vorgesehen.

Die in Fig. 4 gezeigte weitere Ausführungsform eines erfindungsgemäßen Markierungselements 49 ist ähnlich gestaltet wie das in Fig. 3 gezeigte Ausführungsbeispiel, weist aber zusätzlich eine Anordnung von vier keilförmigen Führungssymbolen 50 auf, die das Auffinden der Mitte des Markierungselements 49 unter Verwendung der Mittenkennzeichnung 29 erleichtern.

Dadurch dass das fahrerlose Transportfahrzeug 13 lediglich mit einem einfachen Strichcodeleser und nicht etwa mit einem Matrixcodeleser oder dergleichen ausgestattet sein muss und außerdem keine aufwändigen Arbeiten zur Befestigung der Markierungselemente 19, 39, 49 am Boden auszuführen sind, ist ein erfindungsgemäßes Navigationssystem 11 besonders kostengünstig herstellbar.

### Bezugszeichenliste:

- 11: Navigationssystem
- 13: fahrerloses Transportfahrzeug
- 15: Aktionsbereich
- 17: Einzelbereich
- 19: Markierungselement
- 21: Sensoreinrichtung
- 25: Fahrtrichtung
- 27: Codemuster des inneren Satzes von Codemustern
- 28: Codemuster des äußeren Satzes von Codemustern
- 29: Mittenkennzeichnung
- 31: innere Kreislinie
- 32: äußere Kreislinie
- 35: Abtastrichtung
- 39: Markierungselement
- 49: Markierungselement
- 50: Führungssymbol

## Patentansprüche

1. Navigationssystem (11) für ein fahrerloses Transportfahrzeug (13), mit einem Satz von rasterartig am Boden anzuordnenden Markierungselementen (19, 39, 49), in denen Navigationsinformationen codiert sind, einer am fahrerlosen Transportfahrzeug (13) anzuordnenden Sensoreinrichtung (21) zum Auslesen von Navigationsinformationen aus den Markierungselementen (19, 39, 49) und einer mit der Sensoreinrichtung (21) in Verbindung stehenden Auswerteeinrichtung zum Erzeugen von Steuerungssignalen für das fahrerlose Transportfahrzeug (13) anhand von ausgelesenen Navigationsinformationen, wobei
jedes der Markierungselemente (19, 39, 49) wenigstens zwei graphische Codemuster (27, 28) aufweist, die jeweils zur Codierung der Navigationsinformationen vorgesehen sind, wobei die wenigstens zwei graphischen Codemuster (27, 28) jeweils als eindimensionale Codemuster ausgeführt sind und einen entlang einer Abtastrichtung (35) aufgetragenen Code umfassen, wobei die Abtastrichtungen (35) der wenigstens zwei graphischen Codemuster (27, 28) um einen Winkelversatz zueinander versetzt ausgerichtet sind.

2. Navigationssystem nach Anspruch 1,
dadurch **gekennzeichent**, dass
die Codes der eindimensionalen Codemuster (27, 28) jeweils ausschließlich entlang der Abtastrichtung (35) aufgetragen sind.

3. Navigationssystem nach Anspruch 1 oder 2,
dadurch **gekennzeichent,** dass
der Winkelversatz einem Vollwinkel geteilt durch die Anzahl der wenigstens zwei eindimensionalen Codemuster (27, 28) entspricht.

4. Navigationssystem nach zumindest einem der vorstehenden Ansprüche,
dadurch **gekennzeichent,** dass
jedes der Markierungselemente (19, 39, 49) wenigstens vier eindimensionale graphische Codemuster (27, 28) aufweist, deren Abtastrichtungen (35) jeweils um den gleichen Winkelversatz zueinander versetzt ausgerichtet sind.

5. Navigationssystem nach zumindest einem der vorstehenden Ansprüche,
dadurch **gekennzeichent,** dass
in den Codemustern (27, 28) jeweils eine Positionsinformation und eine Richtungsinformation codiert ist, wobei, in einem bestimmungsgemäßen Betriebszustand des Navigationssystems (11), die Positionsinformation die Position des betreffenden Markierungselements (19, 39, 49) innerhalb einer rasterartigen Anordnung von Markierungselementen angibt und die Richtungsinformation die Orientierung der Abtastrichtung (35) des betreffenden Codemusters (27, 28) oder einer mit dieser in festem Zusammenhang stehenden Bezugsrichtung relativ zu einer ortsfesten Referenzachse angibt.

6. Navigationssystem nach zumindest einem der vorstehenden Ansprüche,
dadurch **gekennzeichent,** dass
die Sensoreinrichtung (21) dazu ausgebildet ist, bei einem Anfahren eines Markierungselements (19, 39, 49) durch das fahrerlose Transportfahrzeug (13) eine Abweichung der Abtastrichtung (35) eines Codemusters (27, 28) von einer momentanen Abtastrichtung der Sensoreinrichtung (21) zu erkennen, und dass die Auswerteeinrichtung dazu ausgebildet ist, anhand der erkannten Abweichung eine Korrekturfahrt des fahrerlosen Transportfahrzeugs (13) auszulösen, welche der Abweichung entgegenwirkt.

7. Navigationssystem nach zumindest einem der vorstehenden Ansprüche,
dadurch **gekennzeichent,** dass
die eindimensionalen Codemuster (27, 28) als Strichcodes ausgeführt sind und die Sensoreinrichtung (21) einen Strichcodeleser umfasst.

8. Navigationssystem nach zumindest einem der vorstehenden Ansprüche,
dadurch **gekennzeichent,** dass
zumindest einige der eindimensionalen Codemuster (27, 28) auf einer Kreislinie (31, 32) angeordnet sind.

9. Navigationssystem nach Anspruch 8,
dadurch **gekennzeichent,** dass
ein erster Satz von Codemustern (27) und ein zweiter Satz von Codemustern (28) vorgesehen ist, wobei die Codemuster (27) des ersten Satzes auf einer inneren Kreislinie (31) und die Codemuster (28) des zweiten Satzes auf einer äußeren Kreislinie (32) angeordnet sind, bevorzugt derart, dass die Anzahl der Codemuster (27) des ersten Satzes kleiner ist als die Anzahl der Codemuster (28) des zweiten Satzes.

10. Navigationssystem nach zumindest einem der vorstehenden Ansprüche,
dadurch **gekennzeichent,** dass
die Markierungselemente (19, 39, 49) jeweils eine Mittenkennzeichnung (29) aufweisen.

11. Navigationssystem nach Anspruch 10,
dadurch **gekennzeichent,** dass der Mittenkennzeichnung (29) wenigstens ein Führungssymbol (50) zugeordnet ist, das einen Abstand eines Messpunkts von der Mitte des Markierungselements (49) kenntlich macht.

12. Navigationssystem nach zumindest einem der vorstehenden Ansprüche,
dadurch **gekennzeichent,** dass
die Markierungselemente (19, 39, 49) als Aufkleber ausgeführt sind, auf welche die graphischen Codemuster (27, 28) aufgedruckt sind.

13. Navigationssystem nach zumindest einem der vorstehenden Ansprüche,
dadurch **gekennzeichent,** dass
die Auswerteeinrichtung dazu ausgebildet ist, bei einem lediglich teilweise erkannten Codemuster (27, 28) anhand des erkannten Teils eine Korrekturfahrt des fahrerlosen Transportfahrzeugs (13) auszulösen und/oder mittels eines Rekonstruktionsalgorithmus den nicht erkannten Teil automatisch zu ergänzen.

14. Fahrerloses Transportsystem mit einem Navigationssystem nach einem der vorstehenden Ansprüche.

15. Markierungselement (19, 39, 49) für ein Navigationssystem nach einem der Ansprüche 1 bis 13, mit einer zur Befestigung am Boden ausgebildeten Unterseite und einer Oberseite, auf die eine Positionskennzeichnung aufgebracht ist,
dadurch **gekennzeichent,** dass
die Positionskennzeichnung wenigstens zwei graphische Codemuster (27, 28) aufweist, die jeweils zur Codierung der Navigationsinformationen vorgesehen sind, wobei die wenigstens zwei graphischen Codemuster jeweils als eindimensionale Codemuster ausgeführt sind und einen entlang einer Abtastrichtung (35) aufgetragenen Code umfassen, wobei die Abtastrichtungen (35) der wenigstens zwei graphischen Codemuster (27, 28) um einen Winkelversatz zueinander versetzt ausgerichtet sind.

## Claims

1. A navigation system (11) for an automated guided vehicle (13), comprising a set of marking elements (19, 39, 49) which are to be arranged in a grid-like manner on the floor and in which navigation information is encoded; a sensor device (21) to be arranged at the automated guided vehicle (13) for reading navigation information from the marking elements (19, 39, 49); and an evaluation device connected to the sensor device (21) for generating control signals for the automated guided vehicle (13) with reference to read navigation information, wherein
each of the marking elements (19, 39, 49) has at least two graphical code patterns (27, 28) which are each provided for encoding the navigation information, wherein the at least two graphical code patterns (27, 28) are each designed as one-dimensional code patterns and comprise a code applied along a scanning direction (35), wherein the scanning directions (35) of the at least two graphical code patterns (27, 28) are aligned offset from one another by an angular offset.

2. A navigation system in accordance with claim 1,
**characterized in that**
the codes of the one-dimensional code patterns (27, 28) are each applied only along the scanning direction (35).

3. A navigation system in accordance with claim 1 or claim 2,
**characterized in that**
the angular offset corresponds to a full angle divided by the number of the at least two one-dimensional code patterns (27, 28).

4. A navigation system in accordance with at least one of the preceding claims,
**characterized in that**
each of the marking elements (19, 39, 49) has at least four one-dimensional graphical code patterns (27, 28) whose scanning directions (35) are each aligned offset from one another by the same angular offset.

5. A navigation system in accordance with at least one of the preceding claims,
**characterized in that**
a piece of positional information and a piece of directional information are respectively encoded in the code patterns (27, 28), with, in an operating state of the navigation system (11) in accordance with its intended purpose, the positional information indicating the position of the respective marking element (19, 39, 49) within a grid-like arrangement of marking elements and the directional information indicating the orientation of the scanning direction (35) of the respective code pattern (27, 28) or of a reference direction in a fixed relationship therewith relative to a spatially fixed reference axis.

6. A navigation system in accordance with at least one of the preceding claims,
**characterized in that**
the sensor device (21) is configured to recognize a deviation of the scanning direction (35) of a code pattern (27, 28) from an instantaneous scanning direction of the sensor device (27) on a travel to a marking element (19, 39, 49) by the automated guided vehicle (13); and **in that** the evaluation device is configured to trigger a correction travel of the automated guided vehicle (13) with reference to the recognized deviation, said correction travel acting against the deviation.

7. A navigation system in accordance with at least one of the preceding claims,
**characterized in that**
the one-dimensional code patterns (27, 28) are designed as barcodes; and **in that** the sensor device (21) comprises a barcode reader.

8. A navigation system in accordance with at least one of the preceding claims,
**characterized in that**
at least some of the one-dimensional code patterns (27, 28) are arranged on a circle line (31, 32).

9. A navigation system in accordance with claim 8,
**characterized in that**
a first set of code patterns (27) and a second set of code patterns (28) are provided, with the code patterns (27) of the first set being arranged on an inner circle line (31) and the code patterns (28) of the second set being arranged on an outer circle line (32), preferably such that the number of code patterns (27) of the first set is smaller than the number of code patterns (28) of the second set.

10. A navigation system in accordance with at least one of the preceding claims,
**characterized in that**
the marking elements (19, 39, 49) each have a center mark (29).

11. A navigation system in accordance with claim 10,
**characterized in that**
at least one guide symbol (50) which marks a distance of a measurement point from the center of the marking element (49) is associated with the center mark (29).

12. A navigation system in accordance with at least one of the preceding claims,
**characterized in that**
the marking elements (19, 39, 49) are designed as stickers onto which the graphical code patterns (27, 28) are printed.

13. A navigation system in accordance with at least one of the preceding claims,
**characterized in that**,
in the event of an only partially recognized code pattern (27, 28), the evaluation device is configured to trigger a correction travel of the automated guided vehicle (13) with reference to the recognized portion and/or to automatically supplement the non-recognized portion by means of a reconstruction algorithm.

14. An automated guided vehicle (13) comprising a navigation system in accordance with any one of the preceding claims.

15. A marking element (19, 39, 49) for a navigation system in accordance with any one of the claims 1 to 13, comprising a lower side formed for fastening to the floor; and an upper side onto which a position mark is applied, **characterized in that**
the position mark has at least two graphical code patterns (27, 28) which are each provided for encoding the navigation information, with the at least two graphical code patterns (27, 28) each being designed as one-dimensional code patterns and comprising a code applied along a scanning direction (35), with the scanning directions (35) of the at least two graphical code patterns (27, 28) being aligned offset from one another by an angular offset.

## Revendications

1. Système de navigation (11) pour un véhicule de transport (13) sans conducteur , comprenant un ensemble d'éléments de marquage (19, 39, 49) à disposer au sol à la manière d'une grille, dans lesquels sont codées des informations de navigation, un dispositif capteur (21) à disposer sur le véhicule de transport (13) sans conducteur et destiné à lire des informations de navigation dans les éléments de marquage (19, 39, 49), et un dispositif d'évaluation connecté au dispositif capteur (21) et destiné à générer des signaux de commande pour le véhicule de transport (13) sans conducteur sur la base des informations de navigation lues,
dans lequel
chacun des éléments de marquage (19, 39, 49) présente au moins deux motifs de code graphiques (27, 28) prévus chacun pour coder les informations de navigation, lesdits au moins deux motifs de code graphiques (27, 28) étant conçus chacun sous forme de motifs de code unidimensionnels et comprenant un code appliqué le long d'une direction de balayage (35), les directions de balayage (35) desdits au moins deux motifs de code graphiques (27, 28) étant orientées de manière décalée l'une par rapport à l'autre d'un décalage angulaire.

2. Système de navigation selon la revendication 1,
**caractérisé en ce que**
les codes des motifs de code unidimensionnels (27, 28) sont chacun appliqués exclusivement le long de la direction de balayage (35).

3. Système de navigation selon la revendication 1 ou 2,
**caractérisé en ce que**
le décalage angulaire correspond à un angle complet divisé par le nombre desdits au moins deux motifs de code unidimensionnels (27, 28).

4. Système de navigation selon l'une au moins des revendications précédentes,
**caractérisé en ce que**
chacun des éléments de marquage (19, 39, 49) comprend au moins quatre motifs de code graphiques unidimensionnels (27, 28) dont les directions de balayage (35) sont chacune orientées en étant décalées les unes par rapport aux autres du même décalage angulaire.

5. Système de navigation selon l'une au moins des revendications précédentes,
**caractérisé en ce que**
une information de position et une information de direction sont codées dans chacun des motifs de code (27, 28), et, dans un état de fonctionnement adéquat du système de navigation (11), l'information de position indique la position de l'élément de marquage correspondant (19, 39, 49) à l'intérieur d'une disposition en forme de grille des éléments de marquage, et l'information de direction indique l'orientation de la direction de balayage (35) du motif de code correspondant (27, 28) ou d'une direction de référence, qui est en relation fixe avec celle-ci, par rapport à un axe de référence stationnaire.

6. Système de navigation selon l'une au moins des revendications précédentes,
**caractérisé en ce que**
le dispositif capteur (21) est réalisé pour reconnaître une déviation de la direction de balayage (35) d'un motif de code (27, 28) par rapport à une direction de balayage instantanée du dispositif capteur (21), lorsque le véhicule de transport (13) sans conducteur s'approche d'un élément de marquage (19, 39, 49), et
**en ce que** le dispositif d'évaluation est réalisé pour déclencher un déplacement correctif du véhicule de transport (13) sans conducteur sur la base de la déviation reconnue, lequel déplacement correctif s'oppose à la déviation.

7. Système de navigation selon l'une au moins des revendications précédentes,
**caractérisé en ce que**
les motifs de code unidimensionnels (27, 28) sont réalisés sous forme de codes à barres, et le dispositif capteur (21) comprend un lecteur de codes à barres.

8. Système de navigation selon l'une au moins des revendications précédentes,
**caractérisé en ce que**
au moins certains des motifs de code unidimensionnels (27, 28) sont disposés sur une ligne circulaire (31, 32).

9. Système de navigation selon la revendication 8,
**caractérisé en ce que**
il est prévu un premier ensemble de motifs de code (27) et un second ensemble de motifs de code (28), les motifs de code (27) du premier ensemble étant disposés sur une ligne circulaire intérieure (31) et les motifs de code (28) du second ensemble étant disposés sur une ligne circulaire extérieure (32), de préférence de telle sorte que le nombre de motifs de code (27) du premier ensemble est inférieur au nombre de motifs de code (28) du second ensemble.

10. Système de navigation selon l'une au moins des revendications précédentes,
**caractérisé en ce que**
les éléments de marquage (19, 39, 49) comprennent chacun un repère central (29).

11. Système de navigation selon la revendication 10,
**caractérisé en ce que**
le repère central (29) est associé à au moins un symbole de guidage (50) qui fait reconnaître une distance d'un point de mesure par rapport au centre de l'élément de marquage (49).

12. Système de navigation selon l'une au moins des revendications précédentes,
**caractérisé en ce que**
les éléments de marquage (19, 39, 49) sont réalisés sous forme d'autocollants sur lesquels sont imprimés les motifs de code graphiques (27, 28).

13. Système de navigation selon l'une au moins des revendications précédentes,
**caractérisé en ce que**
dans le cas d'un motif de code (27, 28) reconnu seulement partiellement, le dispositif d'évaluation est réalisé pour déclencher un déplacement correctif du véhicule de transport (13) sans conducteur sur la base de la partie reconnue, et/ou pour compléter automatiquement la partie non reconnue au moyen d'un algorithme de reconstruction.

14. Système de transport sans conducteur comprenant un système de navigation selon l'une des revendications précédentes.

15. Élément de marquage (19, 39, 49) pour un système de navigation (11) selon l'une des revendications 1 à 13, comportant une face inférieure destinée à la fixation au sol et une face supérieure sur laquelle est appliqué un repère de position,
**caractérisé en ce que**
le repère de position présente au moins deux motifs de code graphiques (27, 28) qui sont prévus chacun pour coder les informations de navigation, lesdits au moins deux motifs de code graphiques étant conçus chacun sous forme de motifs de code unidimensionnels et comprenant un code appliqué le long d'une direction de balayage (35), les directions de balayage (35) desdits au moins deux motifs de code graphiques (27, 28) étant orientées de manière décalée l'une par rapport à l'autre d'un décalage angulaire.
